Europäisches Patentamt

European Patent Office

Office européen des brevets

(19)

(11) Veröffentlichungsnummer: **0 078 251**
**A1**

(12) **EUROPÄISCHE PATENTANMELDUNG**

(21) Anmeldenummer: 82890150.4

(22) Anmeldetag: 20.10.82

(51) Int. Cl.³: **B 25 J 9/00**

(30) Priorität: 23.10.81 AT 4539/81

(43) Veröffentlichungstag der Anmeldung:
04.05.83 Patentblatt 83/18

(84) Benannte Vertragsstaaten:
BE DE FR GB IT SE

(71) Anmelder: IGM - Industriegeräte- und
Maschinenfabriks-gesellschaft mbH
Industriezentrum NÖ-Süd Strasse 2a, Halle M8
A-2351 Wiener Neudorf Niederösterreich(AT)

(72) Erfinder: Vokurka, Franz
Minorgasse 60
A-1140 Wien(AT)

(74) Vertreter: Beer, Otto, Dipl.-Ing. et al,
Lindengasse 8
A-1071 Wien(AT)

(54) **Industrieroboter in Drehgelenkbauweise.**

(57) Ein Industrieroboter in Drehgelenkbauweise besitzt eine Säule (1), die um eine vorzugsweise lotrechte Achse (Achse I) drehbar ist und einen Arm (4), der um eine zur Achse der Säule insbesondere senkrecht stehende, vorzugsweise waagerechte Achse (Achse II) drehbar ist und der an seinem freien Ende einen weiteren, um eine zur vorgenannten Achse (Achse II) vorzugsweise parallelen Achse (Achse III) drehbaren Arm (5) trägt. Der zweite Arm (5) trägt an seinem freien Ende eine vorzugsweise nach mehreren Achsen verdrehbare Halterung (7) für ein Arbeitswerkzeug (8). Die Längserstreckung (Richtung S) der Säule (1) schließt mit der Achse (Achse I), um welche sie drehbar ist, einen spitzen Winkel (α) ein, so daß die Achse (Achse II), um die der an der Säule (1) angeordnete Arm (4) drehbar ist, von der Achse (Achse I), um welche die Säule (1) drehbar ist, einen Abstand (A) aufweist und die beiden Achsen (Achse I und Achse II) einander nicht schneiden.

FIG.1

EP 0 078 251 A1

## Industrieroboter in Drehgelenkbauweise

Die Erfindung betrifft einen Industrieroboter in Drehgelenkbauweise (Knickarm-Roboter) mit einer Säule, die um eine vorzugsweise lotrechte Achse drehbar ist und mit einem Arm, der um eine zur Achse der Säule senkrecht stehende, vorzugsweise waagerechte Achse, drehbar ist und der an seinem freien Ende einen weiteren, um eine zur vorgenannten Achse vorzugsweise parallele Achse, drehbaren Arm trägt, der an seinem freien Ende seinerseits eine vorzugsweise nach mehreren Achsen verdrehbare Halterung für ein Arbeitswerkzeug, wie einen Greifer, eine Schweißzange oder eine Schweißpistole, trägt.

Derartige Industrieroboter sind in den verschiedensten Ausführungsformen bekannt und werden in der Fertigungstechnik in immer größerem Umfang eingesetzt. Die bekannten Roboter besitzen fünf oder sechs Achsen und können zusätzlich - falls gewünscht - verschiebbar aufgestellt sein. Allen bekannten Robotern der eingangs genannten Gattung ist es gemeinsam, daß die für gewöhnlich lotrechte Drehachse der Säule, die den Knickarm trägt, und die Achse, um welche der Knickarm an der Säule drehbar gehaltert ist, einander schneiden. Der Umstand, daß einander die beiden Achsen schneiden, wie dies z.B. aus der US-PS 2 858 947 bekannt ist, hat zur Folge, daß der Radius der Kugel, in dem das Werkzeug im wesentlichen frei positioniert werden kann, nicht beliebig vergrößerbar ist. Jede Vergrößerung des Aktionsradius der bekannten Knickarm-Roboter kann nur dadurch erfolgen, daß die wirksame Länge der Arme vergrößert wird. Jede Verlängerung der Arme hat aber eine Verschlechterung der Positionierungsgenauigkeit zur Folge, weil sich Winkelungenauigkeiten umso stärker auswirken, je länger die Arme sind. Darüber hinaus hat eine Verlängerung der Arme zur Folge, daß diese schwerer und die Hebelverhältnisse immer ungünstiger werden, so daß für die Antriebe des Knickarm-Roboters immer stärkere Motoren eingesetzt werden müssen.

Der Erfindung liegt die Aufgabe zugrunde, einen Industrieroboter der eingangs genannten Gattung mit vergrößertem Aktionsbereich zu schaffen, ohne daß dabei die zuvor beschriebenen Nachteile auftreten.

Erfindungsgemäß wird dies dadurch erreicht, daß die Längserstreckung der Säule mit der Achse, um welche die Säule drehbar ist, einen spitzen Winkel einschließt, so daß die Achse, um die der an der Säule angeordnete Arm drehbar ist, von der Achse, um welche die Säule drehbar ist, einen Abstand aufweist, d.h. daß die beiden Achsen einander nicht schneiden, und daß die Halterung bzw. das von ihr getragene Arbeitswerkzeug innerhalb eines toroidförmigen Raumes im wesentlichen frei positionierbar ist. Durch diese überraschend einfache Maßnahme wird der räumliche Einsatzbereich von Industrierobotern der eingangs genannten Gattung senkrecht zur Drehachse der Säule um den Abstand zwischen Drehachse der Säule und Drehachse des an der Säule gelagerten Armes ringsherum vergrößert. Diese Vergrößerung erfolgt aber ohne eine Vergrößerung der wirksamen Länge der Arme, so daß trotz der Vergrößerung des Arbeitsbereiches die Positionierungsgenauigkeit nicht beeinträchtigt wird und auch für den Antrieb nicht stärkere Motoren eingesetzt werden müssen. Ein weiterer Vorteil des erfindungsgemäßen Industrieroboters besteht darin, daß sich der Arbeitsbereich bei nach oben stehender Säule bis unter - bei hängend angeordneter Säule bis über - die Drehachse des an der Säule gelagerten Armes reicht. Dadurch, daß die Längserstreckung der Säule mit der Achse, um welche die Säule drehbar ist, einen spitzen Winkel einschließt, wird der Abstand zwischen der Drehachse der Säule und der Drehachse des von ihr getragenen Armes besonders einfach herbeigeführt.

Von besonderem Vorteil ist das Merkmal der Erfindung, wonach die Halterung bzw. das von ihr getragene Werkzeug innerhalb eines toroidförmigen Raumes im wesentlichen frei positionierbar ist. Ein ringförmiger Torus ergibt sich, wenn der Abstand der Drehachse der Säule von der Drehachse des an ihr gehalterten Armes größer ist als der Abstand zwischen der zuletzt genannten Achse und dem an der Halterung befestigten Werkzeug. Ein geschlossen toroidförmiger Aktionsbereich ergibt sich, wenn der Abstand zwischen der Drehachse der Säule und der Drehachse des an ihr gehalterten Armes kleiner ist als der Abstand des in die Halterung eingesetzten Werkzeuges von der zuletzt genannten Achse. Der zweitgenannte Fall wird in der überwiegenden Zahl der Anwendungsfälle der günstigere sein.

Aus der US-PS 3 171 549 und der FR-PS 1 260 036 ist es für Manipulatoren einer anderen als der eingangs genannten Gattung an sich bekannt, die horizontale Schwenkachse eines Armes im Abstand von der Drehachse, um welche einer diesen Arm tragende Support verläuft, anzuordnen. Die sich daraus ergebenden Möglichkeiten werden beim Manipulator gemäß der US-PS 3 171 549 nicht ausgenützt, weil dort die Arme nur über einen kleinen Winkelbereich verschwenkbar sind. Wegen der begrenzten Verschwenkbarkeit der bei der US-PS 3 171 549 von Spindeltrieben bewegten Arme ist der Greifer der US-PS 3 171 549 nicht in einem toroidförmigen Raum frei positionierbar. Hierauf kommt es beim Manipulator der US-PS 3 171 549 auch nicht an. Der bekannte Manipulator soll nicht etwa in einem möglichst großen Bereich frei bewegbar sein, sondern er soll so ausgebildet sein, daß der von seinem Greifer gehaltene Gegenstand gegenüber dem Greifer nicht verrutschen kann bzw. daß jedes Verrutschen sofort angezeigt wird.

Weitere Einzelheiten der Erfindung ergeben sich aus der nachstehenden Beschreibung der in den Zeichnungen schematisch wiedergegebenen Ausführungsbeispiele. Es zeigt

Figur 1 einen Knickarm-Roboter in stehender Ausführung in Seitenansicht,

Figur 2 den Roboter aus Figur 1 in Draufsicht,

Figur 3 den Roboter aus Figur 1 von links der Figur 1 aus gesehen,

Figur 4 einen Knickarm-Roboter mit hängender Säule in Seitenansicht und

Figur 5 eine Unteransicht des Roboters aus Figur 4.

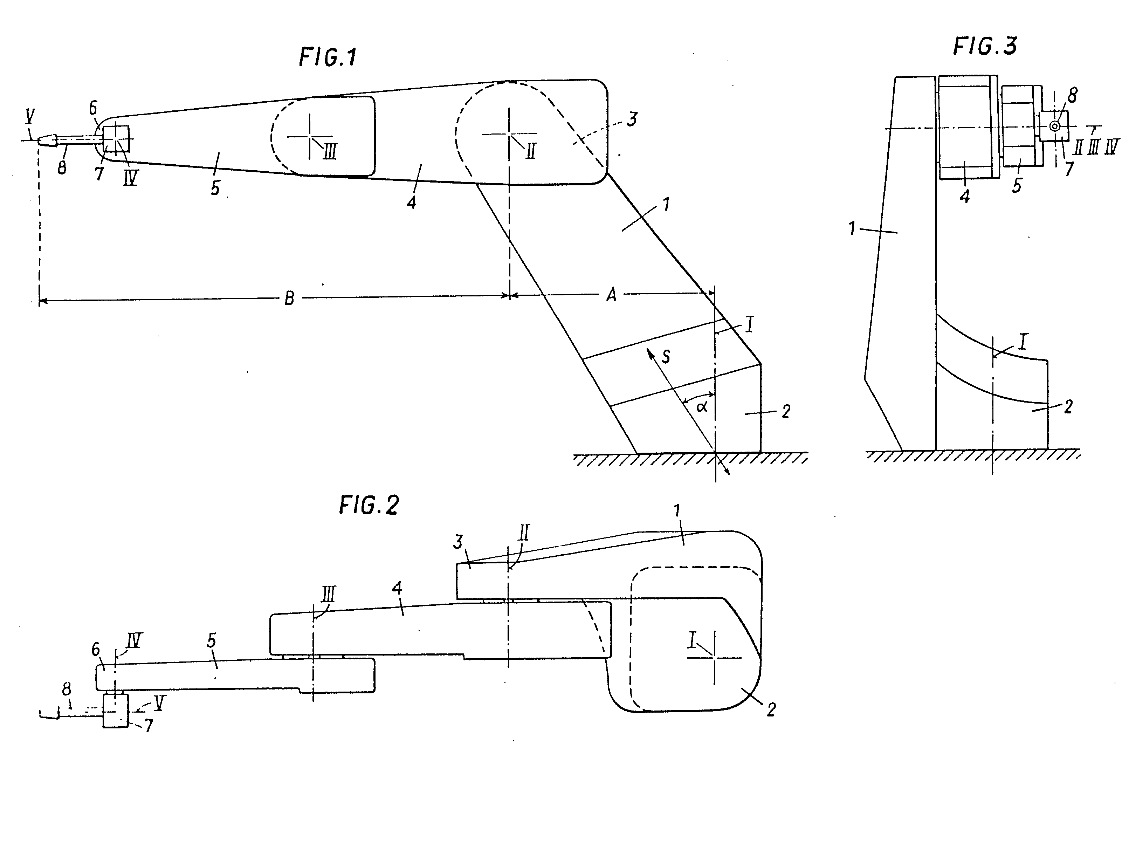

Der in den Figuren 1 bis 3 gezeigte Industrieroboter in Drehgelenkbauweise (Knickarm-Roboter) umfaßt eine Säule 1, die unten über einen Sockel 2 um eine Achse I verdrehbar auf einem nicht näher gezeigten Fundament befestigt ist. Zusätzlich zur Verdrehbarkeit des Sockels 2 und damit der Säule 1 kann der Sockel 2 und damit die Säule 1 verschiebbar gehaltert sein. Aus Figur 1 ist ersichtlich, daß die Längserstreckung S der Säule 1 mit der Achse I einen spitzen Winkel $\alpha$ einschließt. In den meisten Fällen wird die Achse I, um welche die Säule 1 drehbar ist, lotrecht ausgerichtet sein. Dies ist aber nicht zwingend.

An ihrem freien Ende 3 trägt die Säule 1 einen Arm 4, der durch nicht gezeigte Antriebe um eine Achse II, die im gezeigten Ausführungsbeispiel zur Achse I senkrecht steht, drehbar ist. Die Achsen I und II schneiden einander nicht, wie insbesondere die Figuren 1 und 2 zeigen. Der Arm 4 trägt seinerseits um eine zur Achse II vorzugsweise parallele Achse III verdrehbar einen weiteren Arm 5, der an seinem freien Ende 6 eine Halterung 7 für ein Werkzeug 8, im gezeigten Ausführungsbeispiel ist es eine Schweißpistole, trägt. Die Halterung 7 ist um eine Achse IV und das Werkzeug 8 um eine Achse V verdrehbar. Bei dem in Figur 1 bis 3 gezeigten Roboter handelt es sich also um einen fünfachsigen Knickarm-Roboter.

Aus Figur 1 ist ersichtlich, daß sich die horizontale Reichweite des Roboters aus den Strecken A und B zusammensetzt, da die Achse II von der Achse I den Abstand A besitzt. Hingegen betrug die Reichweite der bekannten Industrieroboter dieser Bauart, bei welchen sich die den Achsen I und II entsprechenden Achsen schnitten, lediglich die Strecke B. Der gesamte Aktionsbereich umfaßt einen Raum, der durch Rotation eines Kreises mit dem Radius B um die Achse I entsteht, wobei der Mittelpunkt des Kreises (Projektionsachse II) von der Achse I den Abstand A hat. Ist der Abstand A wie im gezeigten Ausführungsbeispiel kleiner als die Strecke B, dann ergibt sich eine geschlossene Toroidform. Ist hingegen der Abstand A größer als die Strecke B, dann ergibt sich für den gesamten Arbeitsbereich die Form eines ringförmigen Torus.

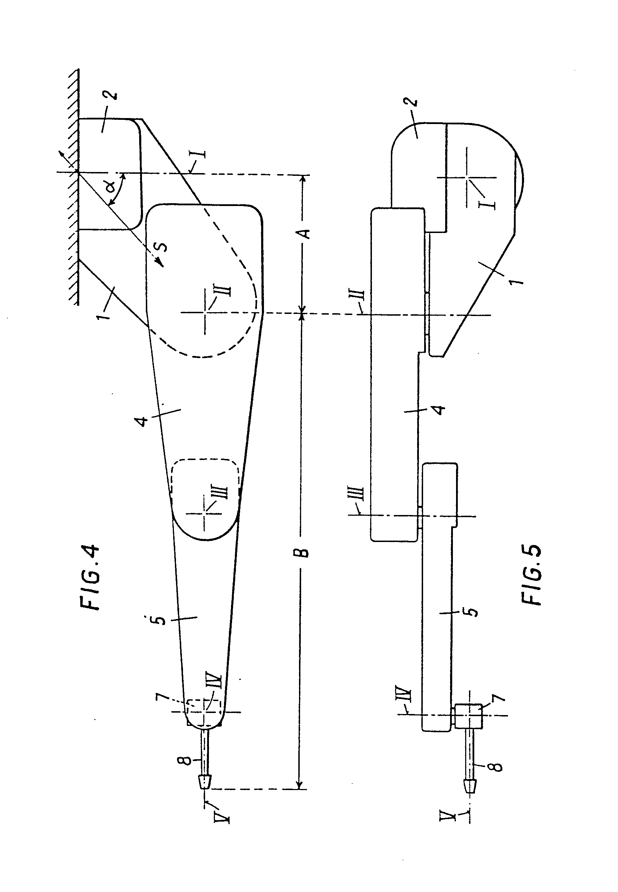

Der in den Figuren 4 und 5 gezeigte Knickarm-Roboter besitzt einen Aufbau, der jenem des in Figur 1 bis 3 gezeigten Roboters im Prinzip entspricht. Der wesentliche Unterschied besteht darin, daß die Säule 1 hängend angeordnet ist, so daß ihr Sockel 2 an einem oberhalb des Knickarm-Roboters angeordneten, nicht näher gezeigten Träger gehaltert ist. Auch hier kann die Säule neben ihrer Drehbarkeit um die Achse I auch horizontal verschiebbar gelagert sein. Wegen der hängenden Anordnung des in den Figuren 4 und 5 gezeigten Knickarm-Roboters ist die Säule 1 auch kürzer ausgebildet als die Säule 1 aus Figur 1 bis 3.

Hinsichtlich des Aktionsbereiches, der vom in der Halterung 7 des in den Figuren 4 und 5 gezeigten Knickarm-Roboters eingesetzten Werkzeug bestrichen werden kann, gelten die für den Roboter gemäß den Figuren 1 bis 3 angestellten Überlegungen sinngemäß.

Sowohl der in den Figuren 1 bis 3 als auch der in den Figuren 4 und 5 gezeigte Knickarm-Roboter hat neben dem vergrößerten Aktionsbereich noch den Vorteil, daß beim Roboter gemäß den Figuren 1 bis 3 der Bereich unmittelbar unterhalb der Achse II, beim Roboter gemäß den Figuren 4 und 5, der unmittelbar über der Achse II liegende Bereich vom Werkzeug ebenfalls bestrichen werden kann.

Patentanspruch

Industrieroboter in Drehgelenkbauweise mit einer Säule (1), die um eine vorzugsweise lotrechte Achse (Achse I) drehbar ist und mit einem Arm (4), der um eine zur Achse der Säule, insbesondere senkrecht stehende, vorzugsweise waagerechte Achse (Achse II) drehbar ist, und der an seinem freien Ende einen weiteren, um eine zur vorgenannten Achse (Achse II) vorzugsweise parallelen Achse (Achse III) drehbaren Arm (5) trägt, der an seinem freien Ende eine vorzugsweise nach mehreren Achsen verdrehbare Halterung (7) für ein Arbeitswerkzeug, wie einen Greifer, eine Schweißzange oder eine Schweißpistole (8) trägt, dadurch gekennzeichnet, daß die Längserstreckung (Richtung S) der Säule (1) mit der Achse (Achse I), um welche die Säule (1) drehbar ist, einen spitzen Winkel ($\alpha$) einschließt, so daß die Achse (Achse II), um die der an der Säule (1) angeordnete Arm (4) drehbar ist, von der Achse (Achse I), um welche die Säule (1) drehbar ist, wie an sich bekannt, einen Abstand (A) aufweist, d.h. daß einander die beiden Achsen (Achse I und Achse II) einander nicht und daß die Halterung (7) bzw. das von ihr getragene Arbeitswerkzeug (8) innerhalb eines toroidförmigen Raumes im wesentlichen frei positionierbar ist.

FIG.1

FIG.3

1/2

FIG.2

0078251

FIG.4

FIG.5

## Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | B 25 J    9/00 |
| X,P | LE NOUVEL AUTOMATISME, Band 27, Nr. 31, Juni 1982, Seiten 40-41, Paris, FR. "Robot de manutention BRM" * Seite 40, Figur * | 1 | |
| | --- | | |
| X | JP-A-54 095 456 (KOBE SEIKOSHO) * Zusammenfassung, Absatz "Constitution", Zeilen 1-7 * | 1 | |
| | --- | | |
| A | DE-A-2 461 235  (MANINGLEY) * Figur 1 * | 1 | |
| | ----- | | |

**RECHERCHIERTE SACHGEBIETE (Int. Cl. ³)**

B 25 J    9/00
B 25 J   11/00

Der vorliegende Recherchenbericht wurde für alle Patentansprüche erstellt.

| Recherchenort | Abschlußdatum der Recherche | Prüfer |
|---|---|---|
| DEN HAAG | 01-02-1983 | LAMMINEUR P.C.G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82